# EUROPÄISCHE PATENTSCHRIFT

(11) **EP 3 561 983 B1**
(45) Veröffentlichungstag und Bekanntmachung des Hinweises auf die Patenterteilung: **06.09.2023**
(21) Anmeldenummer: 19170451.9
(22) Anmeldetag: 23.04.2019
(51) Int. Cl.: H02J 3/14, H02J 3/32, H02J 3/38

(54) **VERFAHREN ZUM BETREIBEN EINES ENERGIEVERSORGUNGSSYSTEMS**
METHOD FOR OPERATING AN ENERGY SUPPLY SYSTEM
PROCÉDÉ DE FONCTIONNEMENT D'UN SYSTÈME D'ALIMENTATION EN ÉNERGIE

(30) Priorität: 23.04.2018 DE 102018206214
(43) Veröffentlichungstag der Anmeldung: 30.10.2019
(73) Patentinhaber: Viessmann Climate Solutions SE, 35108 Allendorf (DE)
(72) Erfinder: OTTA, Tobias, 90537 Feucht (DE); SCHMACK, Doris, 93138 Lappersdorf DE (DE); BREINBAUER, Florian, 92637 Weiden (DE)
(74) Vertreter: MERH-IP Matias Erny Reichl Hoffmann Patentanwälte PartG mbB

(56) Entgegenhaltungen:
- AU-A1- 2014 265 107
- DE-A1- 10 016 857
- DE-A1-102008 037 574
- DE-A1-102009 040 090
- DE-A1-102010 036 087
- DE-A1-102011 078 045
- DE-A1-102012 103 081
- US-A1- 2016 248 251

## Beschreibung

Die vorliegende Erfindung betrifft ein Verfahren zum Betreiben eines Energieversorgungssystems zum Versorgen einer Vielzahl von Energieverbrauchern in einem Gebäude mit elektrischer Energie. Insbesondere soll die elektrische Leistungsaufnahme des gesamten Gebäudes mittels des erfindungsgemäßen Verfahrens steuerbar sein, um eine stromnetzdienliche Energieversorgung des Gebäudes zu verwirklichen.

Der wachsende Anteil erneuerbarer Energien wie zum Beispiel Strom aus Windkraft oder Sonnenenergie führt dazu, dass zu bestimmten Zeiten Strom aus solchen regenerativen Quellen im Überfluss vorhanden ist, während zu anderen Zeiten fossile Spitzenlastkraftwerke emissionsbelasteten Strom erzeugen müssen. Da das Speichern elektrischer Energie mit vielen technischen Hürden verbunden ist, hat sich das Bedürfnis entwickelt, den Verbrauch durch Endabnehmer entsprechend der Verfügbarkeit elektrischer Energie im Netz zu steuern, so dass bei Leistungsspitzen eine erhöhte Abnahme und bei Leistungstälern eine geringere Abnahme herbeigeführt werden kann. Ein derart steuerbarer Verbraucher wird als "netzdienlich" bezeichnet. In der Bundesrepublik Deutschland hat der Gesetzgeber mit dem Energiewirtschaftsgesetz (EnWG) finanzielle Anreize für netzdienliche Verbraucher geschaffen. So ist beispielsweise laut §14a EnWG festgelegt, dass Letztverbraucher für steuerbare Verbrauchseinrichtungen ein reduziertes Netzentgelt mit Energieversorgungsunternehmen (Netzbetreiber) verhandeln dürfen. Dies wird bereits bei sogenannten Wärmepumpentarifen angewendet, die dem Abnehmer von Energie einen vergünstigten Stromtarif gewähren, sofern er dem Energieversorger ermöglicht, den Betriebszustand der Wärmepumpe in gewissen Grenzen zu beeinflussen.

Ein im Stand der Technik bekannter steuerbarer Verbraucher ist die Wärmepumpe. Das Schalten von Wärmepumpen kann beispielsweise über Rundsteuersignale von einem Energieversorger realisiert werden. Neben Wärmepumpen können beispielsweise auch elektrische Fahrzeuge oder Energiespeicher in Gebäuden in netzdienlicher Weise gesteuert werden. Einen Speicher, mit dem elektrische Energie in ein Stromnetz eingespeist und aus diesem entnommen werden kann offenbart beispielsweise die DE 10 2010 001874 A1. Der darin beschriebene Speicher umfasst eine Steuerung, mit der die Abgabe an das Stromnetz und die Aufnahme von Energie aus dem Stromnetz gesteuert wird. Mit solch einem Speicher kann Energie in Zeiten eines Überangebots aufgenommen werden und in Zeiten eines erhöhten Bedarfs wieder ins Netz eingespeist werden. Entsprechend kann der Speicher zum Beispiel auch zum Glätten von Spannungsspitzen beziehungsweise Spannungstälern eingesetzt werden. Die Aufnahme und Abgabe von Energie kann in Abhängigkeit eines aktuellen Stromtarifs, der Tageszeit, Wettervorhersagedaten oder Informationen über den Verbrauch in der Vergangenheit erfolgen.

Die US 2016/248 251 A1 offenbart ein Energiemanagementsystem (EMS) mit einer Vielzahl von Verbrauchern und Energieerzeugern. Das EMS umfasst ferner eine Batterie und ist über einen Netzanschlusspunkt mit eine öffentliche Stromnetz verbunden. Die Batterie kann verwendet werden, um aus dem öffentliche Stromnetz entnommene Lastspitzen abzudämpfen, wenn eine Vielzahl von Verbrauchern aktiv ist.

Die AU 2014-265 107 A1 betrifft ein lokales Stromsystem, das mit einem öffentlichen Stromnetz verbunden ist, und das auch selbst elektrischen Strom erzeugt. Eine Vorrichtung überwacht und steuert den Fluss elektrischer Energie in das und/oder aus dem öffentlichen Stromnetz. Insbesondere kann ein gewünschter Fluss vorgegeben werden, der zwischen zwei Grenzwerten liegen kann. Wird zu wenig Energie aus dem öffentlichen Stromnetz entnommen, kann der Unterschied durch einen lokalen Erzeuger bereitgestellt werden.

Die DE 100 16 857 A1 offenbart eine Vorrichtung zum Überwachen einer Anlage eines Stromnetzes. Eine Verbraucheranlage umfasst eine Anzahl von Verbrauchern elektrischer Energie. Ziel ist es, zu Hochlastzeiten weniger und zu Niederlastzeiten mehr Energie zu verbrauchen. Hierzu weist die Anlage einen Vergleicher auf und einen Speicher, der eine Höchstschwelle der verbrauchbaren elektrischen Energie speichert. Übersteigt der Verbrauch die Höchstschwelle, so wird ein Trennschalter geöffnet, um den Energieverbrauch der Anlage zu unterbrechen.

Der vorliegenden Erfindung liegt die Aufgabe zugrunde, die Netzdienlichkeit eines Gebäudes zu verbessern. Hierzu wird ein Verfahren zum Betreiben eines Energieversorgungssystems zum Versorgen einer Vielzahl elektrischer Energieverbraucher in einem Gebäude vorgeschlagen. Das Energieversorgungssystem umfasst einen Energiespeicher zum Speichern elektrischer Energie, der über ein internes Stromnetz des Gebäudes mit der Vielzahl elektrischer Energieverbraucher verbunden ist, einen Netzanschlusspunkt, über den das interne Stromnetz mit einem öffentlichen Stromnetz verbunden ist, und über den elektrische Energie aus dem öffentlichen Stromnetz bezogen und/oder in das öffentliche Stromnetz eingespeist werden kann, eine Einrichtung zum Messen einer aktuellen Leistungsaufnahme aus dem öffentlichen Stromnetz und eine Kommunikationseinrichtung zum Empfangen von Steuersignalen. Die Lösung der Erfindung wird durch den Verfahrensanspruch 1 bzw. Vorrichtungsanspruch 9 definiert.

Gemäß der Erfindung werden eine Vielzahl von Energieverbrauchern und mindestens ein Energiespeicher, der vorzugsweise ein Speicher für elektrische Energie ist, zu einem stromnetzdienlichen Energieversorgungssystem, welches der Versorgung von Wohnhäusern, Gewerbegebäuden, Industriestandorten oder anderen stromverbrauchenden Gebäuden dient, zusammengefasst. Das Energieversorgungssystem kann auch (lokale) Energieerzeuger, wie zum Beispiel ein Blockheizkraftwerk und/oder eine Windturbine und/oder eine Photovoltaikanlage umfassen. Ferner kann das Energieversorgungssystem Speicher für Wärme und/oder Kälte, zum Beispiel zum Betreiben einer Heizungsanlage und/oder einer Klimaanlage, umfassen. Ist ein Wärme- und/oder Warmwasserspeicher vorhanden, kann eine geringere Kapazität des Energiespeichers für elektrische Energie ausreichend sein.

Im Gebäude kann eine Vielzahl steuerbarer und nicht steuerbarer Energieverbraucher mit Energie versorgt werden. Nicht steuerbare Energieverbraucher sind solche Energieverbraucher, die nicht von der Regel- oder Steuereinrichtung gesteuert werden können. Sie können beispielsweise von Benutzern beziehungsweise Bewohnern des Gebäudes ein- und ausgeschaltet werden. Andererseits können die nicht steuerbaren Energieverbraucher dazu konfiguriert sein, sich selbsttätig ein- und/oder auszuschalten. Beispielsweise kann ein Kühlschrank oder ein Beleuchtungsmittel, das über einen Bewegungssensor gesteuert wird ein nicht steuerbarer Energieverbraucher sein. Nicht steuerbare Energieverbraucher können auch sonstige herkömmliche energieverbrauchende Haushaltsgeräte sein wie zum Beispiel herkömmliche Beleuchtungsmittel, Unterhaltungselektronik, Küchengeräte, usw.

Gemäß dem erfindungsgemäßen Verfahren wird ein erster Grenzwert vorgegeben, der eine maximale aus dem öffentlichen Stromnetz zu beziehende Leistung vorgibt. Ferner wird mittels der Kommunikationseinrichtung ein Steuersignal empfangen. Der Empfang des Steuersignals kann vorzugsweise zeitlich vorhersehbar zu bestimmten vorgegebenen Zeitpunkten erfolgen. Andererseits kann das Steuersignal auch zu nicht vorher festgelegten Zeitpunkten empfangen werden. Das Steuersignal kann beispielsweise von einem Energieversoger oder einem Netzbetreiber übertragen werden. Insbesondere wird das Steuersignal als Rundsteuersignal über das öffentliche Stromnetz übertragen. Ferner ist eine Übertragung über ein Kommunikationsnetz, zum Beispiel ein Mobilfunknetz, ein Telefonnetz, ein Intranet und/oder das Internet möglich. Ferner kann das Energieversorgungssystem einen intelligenten Stromzähler, der auch als Smart Meter Gateway (SMGW) bezeichnet wird, aufweisen. Der intelligente Stromzähler kann insbesondere dazu eingerichtet sein, Steuersignale zu empfangen, sei es über das öffentliche Stromnetz oder eines der oben genannten Kommunikationsnetze.

Der erste Grenzwert legt somit fest, wieviel Leistung dem Gebäude maximal am Netzanschlusspunkt zur Verfügung stehen soll. In einem Grenzfall kann der erste Grenzwert den Wert Null annehmen, so dass gar keine elektrische Leistung aus dem öffentlichen Stromnetz bezogen werden kann. Der erste Grenzwert kann beispielsweise dann über das Steuersignal vorgegeben werden, wenn im öffentlichen Stromnetz eher ein Unterangebot an elektrischer Leistung vorherrscht oder wenn ein solches Unterangebot bereits für einen absehbaren Zeitraum prognostiziert wird.

Die aktuell aus dem öffentlichen Stromnetz aufgenommene Leistung wird mittels der Einrichtung zum Messen einer aktuellen Leistungsaufnahme aus dem öffentlichen Stromnetz ermittelt. Diese Einrichtung kann beispielsweise ein Bestandteil eines (intelligenten) Stromzählers am Netzanschlusspunkt sein.

Das Energieversorgungssystem wird in einem von mindestens zwei Betriebszuständen in Abhängigkeit des empfangenen Steuersignals betrieben. Im ersten Betriebszustand wird die Vielzahl von Energieverbrauchern mit elektrischer Energie aus dem öffentlichen Stromnetz versorgt, ohne dass die Aufnahme elektrischer Leistung aus dem öffentlichen Stromnetz begrenzt wird. Im zweiten Betriebszustand ist der erste Grenzwert gültig, so dass die Aufnahme elektrischer Leistung aus dem öffentlichen Stromnetz auf den ersten Grenzwert begrenzt ist.

In diesem zweiten Betriebszustand kann die Vielzahl von Energieverbrauchern mit elektrischer Energie aus dem Energiespeicher und/oder von einem lokalen Energieerzeuger versorgt werden, so dass die über ein festgelegtes zeitliches Intervall gemittelte Aufnahme elektrischer Leistung aus dem öffentlichen Stromnetz kleiner als der erste Grenzwert ist. Dieses festgelegte zeitliche Intervall, über den die Aufnahme elektrischer Leistung aus dem öffentlichen Stromnetz gemittelt wird, ist kleiner als ein Zeitraum, über den der erste Grenzwert gültig ist. Der Zeitraum der Gültigkeit des ersten Grenzwerts wird als Sperrzeit bezeichnet. Insbesondere wird das Energieversorgungssystem für die Dauer der Sperrzeit im zweiten Betriebszustand betrieben.

Im zweiten Betriebszustand wird also wenigstens ein Teil des Energiebedarfs des Gebäudes vom Energiespeicher und/oder einem lokalen Energieerzeuger bezogen. Ferner kann in Zeiten außerhalb der Sperrzeit so energetisch vorgesorgt werden, dass bei Vorliegen des ersten Grenzwerts der Energiebedarf des Gebäudes entsprechend niedrig ist, weil beispielsweise alle steuerbaren Verbraucher vor Anfang der Sperrzeit bedient wurden. Der erste Grenzwert kann auch so eingestellt werden, dass der (nahezu) gesamte Energiebedarf des Gebäudes durch den Energiespeicher und/oder einen lokalen Energieerzeuger gedeckt werden muss. In diesem Grenzfall kann der erste Grenzwert den Wert Null annehmen.

Dadurch, dass ein erster Grenzwert festgelegt wird, kann die Planungssicherheit für einen Energieversorger erheblich verbessert werden, da für festgelegte Sperrzeiten eine maximale Leistungsaufnahme vorgeben werden kann.

Umgekehrt wird erfindungsgemäss ein zweiter Grenzwert vorgegeben, der eine Mindestleistungsaufnahme des Energieversorgungssystems aus dem öffentlichen Stromnetz für einen festgelegten Zeitraum definiert. Durch die Vorgabe des zweiten Grenzwerts kann die Planungssicherheit für den Energieversorger oder Netzbetreiber weiter verbessert werden, da ein Mindestabsatz elektrischer Leistung für bestimmte Zeiträume vorgegeben werden kann. Entsprechend kann das Energieversorgungssystem in einem dritten Betriebszustand betrieben werden, in dem der zweite Grenzwert gültig ist. Das heißt, dass im dritten Betriebszustand die über ein festgelegtes zeitliches Intervall gemittelte Aufnahme elektrischer Leistung aus dem öffentlichen Stromnetz größer als der zweite Grenzwert ist. Beispielsweise kann beim Betreiben des Energieversorgungssystems im dritten Betriebszustand ein Ladevorgang des Energiespeichers durchgeführt werden. Der zweite Grenzwert kann insbesondere dann über das Steuersignal vorgegeben werden, wenn im öffentlichen Stromnetz eher ein Überangebot an elektrischer Leistung vorherrscht oder wenn ein solches Überangebot für einen bereits absehbaren Zeitraum prognostiziert wird.

Das erfindungsgemäße Verfahren kann beispielsweise von einer Einrichtung zum Regeln oder Steuern des Energieversorgungssystems ausgeführt werden. Die Einrichtung weist einen Datenträger auf, der ein Programm speichert, das Instruktionen zum Ausführen des erfindungsgemäßen Verfahrens umfasst. Die Einrichtung zum Regeln oder Steuern des Energieversorgungssystems wird im Folgenden auch als Regel- oder Steuereinrichtung oder Energiemanagement-System (EMS) bezeichnet.

Ein Ziel beim Betrieb des Energieversorgungssystems ist es, das öffentliche Stromnetz an dem es angeschlossen ist, zu stabilisieren beziehungsweise den Lastfluss im öffentlichen Stromnetz so zu regulieren, dass eine Überlastung des öffentlichen Stromnetzes verhindert werden kann. Hierdurch kann das erfindungsgemäße Energieversorgungssystem für ein Gebäude dazu beitragen, dass auf einen Ausbau einer Infrastruktur des öffentlichen Stromnetzes verzichtet werden kann, da vorhandene Kapazitäten effizienter genutzt werden können.

Das erfindungsgemäße Verfahrens kann auch darauf ausgerichtet werden, die Erzeugung und den Verbrauch von Energie in einem Gebäude so effizient wie möglich zu gestalten, um beispielsweise den Eigenbedarf an Energie zu optimieren beziehungsweise den Bezug von Energie aus dem öffentlichen Netz zu minimieren. Insbesondere beim Einsatz erneuerbarer Energiequellen wie zum Beispiel Photovoltaikanlagen oder Windturbinen ist die Energieerzeugung vom Stand der Sonne und/oder vom Wetter abhängig, so dass zu bestimmten Tageszeiten ein Überangebot von Energie entstehen kann, während zu anderen Tageszeiten, zum Beispiel abends oder nachts oder bei ungünstigem Wetter, ein erhöhter Energiebedarf bestehen kann. Durch Betreiben des Energieversorgungssystems in Abhängigkeit einer prognostizierten Energieerzeugung durch einen lokalen Energieerzeuger kann der Bezug von Energie aus einem öffentlichen Netz minimiert werden. Insbesondere wird das Energieversorgungssystem in Abhängigkeit einer prognostizierten Energieerzeugung in einem der hierin beschriebenen Betriebszustände betrieben.

Das erfindungsgemäße Verfahren erlaubt es, die Leistungsaufnahme eines Gebäudes als Ganzes zu regeln beziehungsweise steuern, so dass das ganze Gebäude zu einem einzigen netzdienlich steuerbaren Verbraucher wird. Somit kann in vorteilhafter Weise erreicht werden, dass der gesamte Bedarf an elektrischer Energie des Gebäudes zu einem vergünstigten Stromtarif bezogen werden kann. Der erste Grenzwert legt dabei fest, wieviel Leistung gemittelt über ein festgelegtes Zeitintervall aus dem öffentlichen Stromnetz bezogen werden darf.

Eine besondere Herausforderung bei diesem Verfahren ist es, den Ladungszustand des Energiespeichers unter Beachtung eines prognostizierten Energieverbrauchs und gegebenenfalls unter Beachtung einer prognostizierten lokalen Energieerzeugung so zu steuern, dass die Versorgung der Energieverbraucher im Gebäude zu jeder Zeit sichergestellt werden kann.

In einer bevorzugten Ausführungsform kann das Steuersignal ein reines Schaltsignal sein, welches mindestens einen vorgegebenen und im Energieversorgungssystem hinterlegten Grenzwert aktiviert oder deaktiviert. Weiter vorzugsweise kann der Wert mindestens einer der beschriebenen Grenzwerte durch das Steuersignal vorgegeben werden. Insbesondere werden der erste Grenzwert und/oder der zweite Grenzwert durch das Steuersignal vorgegeben. Die zeitliche Gültigkeit eines Grenzwerts kann entweder vorab festgelegt werden oder solange bestehen, bis ein neuer Wert des Grenzwerts durch das Steuersignal vorgegeben wird, beziehungsweise bis ein Steuersignal empfangen wird, welches die Gültigkeit eines Grenzwerts aufhebt. Insbesondere kann das Steuersignal die Gültigkeit eines Grenzwerts im Voraus ankündigen, so dass das Energieversorgungssystem einen Betrieb im entsprechenden Betriebszustand vorbereiten kann, indem beispielsweise der Energiespeicher geladen wird und/oder steuerbare Energieverbraucher auf einen entsprechenden Betriebszustand vorbereitet werden können.

Durch das Steuersignal kann ein Energieversorger beziehungsweise ein Netzbetreiber also einen Betrieb des Energieversorgungssystems in einem der hierin beschriebenen Betriebszustände anfordern. Dies kann wie oben beschrieben über direkte Schaltanforderungen geschehen, die einen Betriebszustand oder Grenzwert vorgeben. Andererseits können über die Steuersignale Werte der Grenzwerte und/oder Zeiträume der Gültigkeit von Grenzwerten übertragen werden, die dann zu den festgelegten Zeiträumen einen entsprechenden Betrieb des Energieversorgungssystems in einem der Betriebszustände bewirken.

Der Energiespeicher muss ausreichend Speicherkapazität aufweisen, um bei einer Anforderung durch den Energieversorger, die gesamte Stromversorgung des Hauses übernehmen zu können oder den Bezug elektrischer Leistung aus dem Netz auf einen vorgegebenen ersten Grenzwert zu begrenzen. Andererseits kann die Regel- oder Steuereinrichtung den Betrieb des Energieversorgungssystems so steuern, dass der Energiespeicher zu einem Zeitpunkt, in dem ein Betrieb im dritten Betriebszustand beginnt, einen möglichst geringen Ladezustand aufweist, so dass wenigstens ein Teil der abzunehmenden Leistung zum Laden des Energiespeichers verwendet werden kann. Ferner kann es möglich sein, dass im dritten Betriebszustand ein Betrieb der Wärmepumpe durch das EMS angefordert wird.

Vorzugsweise sind in einer Speichereinrichtung der Regel- oder Steuereinrichtung Verbrauchsprofile hinterlegt, die vor, bei oder nach einem Betrieb des Energieversorgungssystems in einem der Betriebszustände aufgerufen werden können. Durch ein Verbrauchsprofil kann festgelegt werden, welche steuerbaren Energieverbraucher ein- beziehungsweise ausgeschaltet sind und/oder mit welcher Leistung sie gegebenenfalls betrieben werden sollen.

Da im zweiten Betriebszustand lediglich die über ein festgelegtes Zeitintervall gemittelte Aufnahme elektrischer Leistung aus dem öffentlichen Stromnetz kleiner als der erste Grenzwert sein muss, ist es nicht zwingend notwendig, dass die Leistungsaufnahme während der gesamten Sperrzeit kleiner als der erste Grenzwert ist. Ein kurzeitiges Überschreiten des ersten Grenzwerts kann also zulässig sein. Das zeitliche Intervall, über das die gemittelte Aufnahme elektrischer Leistung aus dem öffentlichen Stromnetz kleiner als der erste Grenzwert sein muss, kann beispielsweise einige Minuten, typischerweise zehn oder fünfzehn oder zwanzig oder dreißig Minuten betragen und ist somit in der Regel deutlich kürzer als eine Sperrzeit. Insbesondere kann die gemittelte Aufnahme elektrischer Leistung aus dem öffentlichen Stromnetz während der Spitzenlastzeiten auf den ersten Grenzwert begrenzt werden.

Bei einem bevorzugten Verfahren wird das Energieversorgungssystem zu festen vorgegebenen (wiederkehrenden) Zeiträumen in einem der Betriebszustände, insbesondere im zweiten Betriebszustand (Sperrzeiten) betrieben. Die Sperrzeiten (im Falle des zweiten Betriebszustands) können insbesondere mit bekannten oder prognostizierten Spitzenlastzeiten korrelieren, die beispielsweise morgens und abends auftreten können, wenn besonders viele ans öffentliche Stromnetz angeschlossene Haushalte einen erhöhten Bedarf elektrischer Energie haben. Durch Betreiben des Energieversorgungssystems im zweiten Betriebszustand während der Sperrzeiten kann das öffentliche Stromnetz entlastet werden. Bei festen, wiederkehrenden Sperrzeiten, können die festgelegten Sperrzeiten auch lokal durch die Regel- oder Steuereinrichtung gespeichert werden, so dass hier kein Empfang eines entsprechenden Steuersignals vom Energieversorger oder Netzbetreiber mehr notwendig ist.

Der Energiespeicher des Energieversorgungssystems kann insbesondere mit elektrischer Energie aus dem öffentlichen Stromnetz geladen werden. Das Laden des Energiespeichers mit elektrischer Energie aus dem öffentlichen Stromnetz findet vorzugsweise dann statt, wenn ein Überangebot an elektrischer Energie im öffentlichen Stromnetz vorhanden ist, so dass dieses Überangebot verbraucht beziehungsweise gespeichert werden kann. Ein Überangebot an Energie hat meist auch einen günstigeren Stromtarif zur Folge, so dass das gesteuerte Abnehmen von Energie zu geringeren Kosten der Stromversorgung des Gebäudes führen kann. Vorzugsweise findet das Laden des Energiespeichers mit elektrischer Energie aus dem öffentlichen Stromnetz im dritten Betriebszustand statt, wenn eine Mindestleistung gemäß dem zweiten Grenzwert abgenommen werden muss.

Alternativ kann der Energiespeicher des Energieversorgungssystems mit elektrischer Energie von einem lokalen Energieerzeuger, beispielsweise einer PV-Anlage geladen werden. Es ist jedoch bevorzugt, dass lokal erzeugte Energie sofort ans interne Stromnetz verteilt und verbraucht wird, so dass Verluste durch das Speichern der Energie vermieden werden können.

Das Steuersignal vom Stromversorger wird vorzugsweise über das öffentliche Stromnetz gesendet. Alternativ kann das Steuersignal auch über eine Kommunikationsleitung, beispielsweise über das Internet, ein Telefonnetz oder über drahtlose Kommunikationsnetze gesendet und durch eine geeignete Kommunikationseinrichtung des Energieversorgungssystems empfangen und verarbeitet werden. Insbesondere weist eine Regel- oder Steuereinrichtung eines erfindungsgemäßen Energieversorgungssystems eine Kommunikationseinrichtung zum Empfangen des Steuersignals auf.

Die im dritten Betriebszustand aus dem öffentlichen Stromnetz bezogene Energie kann beispielsweise zum Laden des Energiespeichers, zum Betreiben einer Wärmepumpe, zum Laden eines Wärmespeichers und/oder zum Laden eines elektrischen Fahrzeugs verwendet werden. Die Mindestabnahme elektrischer Leistung gemäß dem zweiten Grenzwert kann beispielsweise in Abhängigkeit einer Prognose der durch den Energieversorger erzeugten elektrischen Leistung vorgegeben werden. Die Prognose der Energieerzeugung kann zum Beispiel anhand von Wetterprognosen erstellt werden. Insbesondere die erwartete Erzeugung elektrischer Leistung aus Windkraft und/oder Sonnenstrahlung (durch den Energieversorger) kann anhand von Wetterprognosen berechnet werden. Der dritte Betriebszustand kann bevorzugt auch während festen wiederkehrenden Zeiträumen, in denen üblicherweise ein Überangebot von Energie im öffentlichen Stromnetz verfügbar ist, aufgerufen werden.

Vorzugsweise können in ähnlicher Weise wie der erste und zweite Grenzwert auch ein dritter Grenzwert und/oder ein vierter Grenzwert vorgegeben werden. Gemäß dem dritten Grenzwert kann eine minimale durch das Energieversorgungssystem am Netzanschlusspunkt ins öffentliche Stromnetz eingespeiste Leistung festgelegt werden. Andererseits kann gemäß dem vierten Grenzwert eine maximale durch das Energieversorgungssystem am Netzanschlusspunkt ins öffentliche Stromnetz eingespeiste Leistung festgelegt werden. Entsprechend kann das Energieversorgungssystem in Abhängigkeit des Steuersignals in einem vierten Betriebszustand betrieben werden, in dem der dritte Grenzwert gültig ist. Weiter vorzugsweise kann das Energieversorgungssystem in Abhängigkeit des Steuersignals in einem fünften Betriebszustand betrieben werden, in dem der vierte Grenzwert gültig ist.

Der Betrieb des Energieversorgungssystems im vierten oder fünften Betriebszustand erfolgt ähnlich wie oben bereits anhand des zweiten und dritten Betriebszustands beschrieben wurde. Das vom Energieversorgungssystem ins öffentliche Netz einzuspeisende Leistung kann beispielsweise vom lokalen Energieerzeuger erzeugt werden und/oder aus dem Energiespeicher entnommen werden.

Da es vorkommen kann, dass kurzzeitig ein erhöhter Bedarf an Energie im Gebäude auftritt (beispielsweise eine Lastspitze bei Einschalten eines Gerätes), soll es möglich sein, während des für die Mittelung der bezogenen Leistung vorgegebenen Zeitintervalls, kurzzeitig mehr Leistung aus dem öffentlichen Netz zu beziehen, als eigentlich durch den ersten Grenzwert festgelegt ist. Die Regel- oder Steuereinrichtung kann entsprechend dazu eingerichtet sein, während des vorgegebenen Zeitintervalls schnell Maßnahmen zu ergreifen, um den Verbrauch wieder zu reduzieren und somit gemittelt über den vorgegebenen Zeitraum die aufgenommene Leistung unter den ersten Grenzwert zu regeln. Dazu können insbesondere steuerbare Energieverbraucher ausgeschaltet oder auf einen niedrigeren Verbrauch geregelt werden.

Die Vielzahl von Energieverbrauchern umfasst vorzugsweise mindestens einen steuerbaren Energieverbraucher, der abgeschaltet oder dessen Verbrauch gedrosselt werden kann, wenn beispielsweise der erste Grenzwert überschritten wird. Der mindestens eine steuerbarere Energieverbraucher kann beispielsweise eine Wärmepumpe oder eine Ladestation für ein Elektrofahrzeug sein. Eine Wärmepumpe kann zum Heizen und/oder Kühlen eines Trägermediums zum Heizen und/oder Kühlen von Räumen des Gebäudes verwendet werden. Die Wärmpumpe kann ferner mit einem Warm- und/oder Kaltwasserspeicher gekoppelt sein, so dass Energie auch in Form von Wärme und/oder Kälte gespeichert werden kann, beispielsweise dann, wenn ein zweiter Grenzwert vorgegeben ist oder sich das Energieversorgungssystem im ersten Betriebszustand befindet und in naher Zukunft eine Sperrzeit angekündigt ist.

Über eine Ladestation für ein Elektrofahrzeug kann ebenfalls elektrische Energie gespeichert werden, wobei diese Energie in der Regel jedoch nicht mehr in den internen Stromkreis zurückgeführt werden soll. Das Abschalten oder Drosseln der Leistung eines steuerbaren Energieverbrauchers kann vorzugsweise mittels der Regel- oder Steuereinrichtung vorgenommen werden.

Ein steuerbarer Energieverbraucher kann von der Regel-oderSteuereinrichtung ein- und ausgeschaltet werden, so dass zumindest der Zeitpunkt des Verbrauchs des steuerbaren Energieverbrauchers durch die Regel- oder Steuereinrichtung vorgegeben werden kann. Vorzugsweise kann auch die (maximale oder minimale) Leistungsaufnahme eines steuerbaren Energieverbrauchers durch die Regel- oder Steuereinrichtung regel- oder steuerbar sein. Zumindest kann der Regel- oder Steuereinrichtung aber bekannt sein, welche maximale und/oder minimale Leistungsaufnahme durch den steuerbaren Energieverbraucher zu erwarten ist. Ein steuerbarer Energieverbraucher kann beispielsweise eine Wärmepumpe, ein Nachtwärmespeicher, eine Vorrichtung zum Belüften mindestens eines Raumes, eine Klimaanlage, eine Ladestation für ein Elektrofahrzeug oder eine steuerbare Waschmaschine oder ein Geschirrspüler sein.

Wenn steuerbare Energieverbraucher im Gebäude vorhanden sind, deren Verbrauch durch Abschalten oder Drosseln des Verbrauchs steuerbar ist, kann der Energieverbrauch beziehungsweise die Leistungsaufnahme des Gebäudes als Ganzes effizienter geregelt beziehungsweise gesteuert werden, als wenn dies nur über das Steuern des vom Energiespeicher bereitgestellten Anteils der aufgenommenen beziehungsweise abgegebenen Leistung geschieht. Insbesondere wenn der Energieverbrauch durch nicht steuerbare Energieverbraucher hoch ist oder die übrige Kapazität des Energiespeichers gering ist, kann der benötigte Anteil eventuell nicht mehr durch den Energiespeicher gedeckt werden. Um in solch einem Fall nicht mehr Leistung als durch den ersten Grenzwert vorgegeben aus dem öffentlichen Netz beziehen zu müssen, kann die Regel- oder Steuereinrichtung mindestens einen steuerbaren Energieverbraucher nach Bedarf abschalten oder auf einen niedrigeren Verbrauch regeln.

Umgekehrt kann es vorteilhaft sein, den Verbrauch durch mindestens einen steuerbaren Energieverbraucher zu erhöhen, wenn zum Beispiel gerade ein Überangebot an elektrischer Energie im öffentlichen Netz vorhanden ist, oder lokal von einem Energieerzeuger bereitgestellt wird. Um diese Energie abzunehmen kann nach Bedarf eine Wärmepumpe eingeschaltet oder ein elektrisches Fahrzeug geladen werden. Bei einer besonders vorteilhaften Ausgestaltung des Energieversorgungssystems weist dieses auch Speicher für Wärme und/oder Kälte auf, so dass elektrische Energie in Wärmeenergie umgewandelt und gespeichert werden kann beziehungsweise in Form von Kälte gespeichert werden kann. Dies kann insbesondere beim Betreiben des Energieversorgungssystems im dritten oder fünften Betriebszustand von Vorteil sein.

In einem weiteren Schritt des Verfahrens kann eine Verbrauchsprognose anhand von historischen Verbrauchsdaten der Vielzahl von Energieverbrauchern erstellt werden. Das Betreiben des Energieversorgungssystems in einem der Betriebszustände kann dann entsprechend in Abhängigkeit der Verbrauchsprognose erfolgen. Das Speichern historischer Verbrauchsdaten für das Erstellen der Verbrauchsprognose kann lokal im Energieversorgungssystem geschehen. Hierzu kann insbesondere die Regel- oder Steuereinrichtung eine geeignete Speichereinrichtung umfassen, in der periodisch Messwerte des Verbrauchs und/oder der Energieerzeugung abgespeichert werden. Zum Erfassen der Verbrauchsdaten kann das Energieversorgungssystem eine Vielzahl von Mitteln zum Messen der Leistungsaufnahme einzelner Verbraucher oder von Gruppen von Verbrauchern aufweisen. Ferner kann ein Messwert der lokal erzeugten elektrischen Leistung erfasst werden.

Alternativ kann vorgesehen sein, dass der Energieversoger oder Netzbetreiber, Verbrauchsdaten vom Energieversorgungssystem empfangen beziehungsweise abrufen und speichern kann. Die Regel- oder Steuereinrichtung des Energieversorgungssystems kann die Verbrauchsdaten auch an einen zentralen Server beziehungsweise eine Cloud übertragen, wo die Daten zentral gespeichert und ausgewertet werden können. Die Kommunikation mit dem Energieversorger oder Netzbetreiber, dem Server oder der Cloud kann insbesondere über ein Intranet oder das Internet erfolgen. Das Energieversorgungssystem kann zudem Messgeräte, beispielsweise sogenannte Smart Meter Gateways, aufweisen, die über das Internet mit dem Server oder der Cloud kommunizieren und Verbrauchsdaten übertragen.

Um die Genauigkeit des prognostizierten Energiebedarfs zu verbessern, können dem Verfahren charakteristische Informationen über alle oder einige im Gebäude betriebene steuerbare und/oder nicht steuerbare Energieverbraucher vorliegen, wie zum Beispiel deren Anzahl, deren minimale, maximale und/oder durchschnittliche Leistungsaufnahme und/oder typische Zeiten während eines Tages, an denen die jeweiligen Energieverbraucher verwendet werden. Ferner können Informationen über die Nutzer des Gebäudes vorliegen oder erfasst werden, wie beispielsweise deren typische Verhaltensmuster und Anwesenheitsprofile.

Bei der Berechnung der Verbrauchsprognose können auch Daten wie der Wochentag, das Datum, die Jahresszeit, eine gemessene Außentemperatur und dergleichen berücksichtigt werden. An Wochenenden oder Feiertagen ist etwa ein anderes Verbrauchsmuster der Benutzer des Gebäudes zu erwarten als an Werktagen. So kann der Energieverbrauch in einem Bürogebäude am Wochenende oder an einem Feiertag deutlich geringer ausfallen als an einem Werktag. Außerdem werden bestimmte Verbraucher typischerweise eher an Tagen mit hohen beziehungsweise niedrigen Außentemperaturen verwendet, so dass neben der reinen Datumsinformation auch Wetterinformationen berücksichtigt werden können.

Zusätzlich kann das Energieversorgungssystem konfiguriert sein, Anwesenheitsinformationen über die Benutzer oder Bewohner des Gebäudes zu verwenden. Diese Informationen können zum Beispiel über Sensoren, Verbrauchsmuster und/oder eine App oder ein sonstiges Benutzerinterface mit dem Energieversorgungssystem durch die Benutzer selbst generiert werden. So können beispielsweise auch Ortsinformationen von einem Smartphone an einen Server übertragen werden, so dass automatisch erkannt werden kann, ob sich ein Benutzer des Gebäudes in der Nähe des Gebäudes aufhält.

Das Erstellen der Verbrauchsprognose kann insbesondere jeweils für die nächste vorausliegende Sperrzeit erfolgen. Dazu wird der Verbrauch des gesamten Gebäudes in einer geeigneten zeitlichen Auflösung von typischerweise fünf bis zehn Minuten gemessen und gespeichert beziehungsweise simuliert und/oder prognostiziert. Da insbesondere Wettervorhersagen mit geringer werdendem Zeitabstand genauer werden, kann es vorteilhaft sein, eine wetterabhängige Verbrauchs- oder Energieerzeugungsprognose möglichst kurzfristig zu erstellen.

Das Betreiben des Energieversorgungssystems in einem der beschriebenen Betriebszustände kann auch in Abhängigkeit einer Prognose der Energieerzeugung des Energieversorgers und/oder des lokalen Energieerzeugers erfolgen. Zum Prognostizieren der Energieerzeugung können ebenfalls Wettervorhersagedaten verwendet werden. Eine mögliche Energieerzeugung (zum Beispiel durch eine PV-Anlage, eine Windturbine oder ein Blockheizkraftwerk, BHKW) während einer Sperrzeit kann insbesondere auch beim Erstellen der Verbrauchsprognose berücksichtigt werden. Die für die kommende Sperrzeit benötigte und im Energiespeicher vorzuhaltende Energie kann entsprechend um die prognostizierte lokal erzeugte Energiemenge reduziert werden. Somit kann das Erstellen der Prognose der Stromerzeugung dazu beitragen, dass eine geringere Speicherkapazität vorgehalten werden muss, was die Kosten bei Anschaffung und Wartung des Energiespeichers reduzieren kann. Darüber hinaus kann hierdurch der vorhandene Energiespeicher effizienter genutzt werden.

Da die tatsächlich benötigte Energiemenge von der Prognose abweichen kann, wird bei einer Berechnung der im Energiespeicher zu speichernden Energie vorzugsweise ein prozentualer oder absoluter Sicherheitszuschlag festgelegt und zu der Verbrauchsprognose hinzugezählt. Auf Grundlage der Verbrauchsprognose und gegebenenfalls der Energieerzeugungsprognose kann ein Mindestladezustand des Energiespeichers festgelegt werden, der zu Beginn einer Sperrzeit vorhanden sein soll. Der Mindestladezustand wird so berechnet, dass der Energiespeicher den für eine Sperrzeit prognostizierten Energiebedarf des Gebäudes decken kann. Hierbei kann insbesondere die erlaubte aus dem öffentlichen Stromnetz zu beziehende Leistung gemäß dem ersten Grenzwert berücksichtigt werden.

In einem Schritt des Verfahrens kann ein aktueller Ladezustand des Energiespeichers erfasst werden. Die Regel- oder Steuereinrichtung kann über drahtgebundene oder drahtlose Kommunikationsleitungen mit dem Energiespeicher zum Datenaustausch verbunden sein, um den aktuellen Ladezustand des Energiespeichers zu erfassen. Außerdem kann die Regel- oder Steuereinrichtung Regel- oder Steuersignale an den Energiespeicher und gegebenenfalls den mindestens einen steuerbaren Energieverbraucher senden. Darüber hinaus kann das Energieversorgungssystem von der Regel- oder Steuereinrichtung steuerbare Wechselrichter umfassen. Ferner kann das Energieversorgungssystem eine Vielzahl von Sensoren, zum Beispiel zum Messen von Energieverbräuchen, aufweisen, die entsprechende Messsignale an die Regel- oder Steuereinrichtung übertragen.

Der Energiespeicher wird vorliegend insbesondere als Speicher für elektrische Energie beschrieben. Prinzipiell kann die Erfindung aber auch auf Energieversorgungssysteme mit einem Energiespeicher, der Energie in Form von Wärme, Kälte, chemischer Energie oder mechanischer Energie speichert, angewendet werden. Mechanische Energie kann beispielsweise in Form von Bewegungsenergie (zum Beispiel durch ein Schwungrad) oder in Form von potentieller Energie (durch Anheben einer Masse) gespeichert werden. Ein besonders bevorzugtes Energieversorgungssystem weist jeweils Energiespeicher für elektrische Energie und für Wärme auf.

Das Energieversorgungssystem kann ferner mindestens eine erneuerbare Energiequelle wie zum Beispiel eine Photovoltaikanlage (PV-Anlage) oder eine Windturbine umfassen, die konfiguriert ist, die (steuerbaren und nicht steuerbaren) Energieverbraucher und den Energiespeicher mit Energie zu versorgen. Eine Photovoltaikanlage weist üblicherweise einen Wechselrichter auf, um den von der PV-Anlage erzeugten Gleichstrom in Wechselstrom umzuwandeln. Der Wechselrichter kann zum Beispiel von der Regel- oder Steuereinrichtung gesteuert werden. Ferner kann die PV-Anlage einen Stromzähler umfassen, um die erzeugte Energiemenge zu messen. Insbesondere kann ein Teil der erzeugten Energie zum Laden des Energiespeichers verwendet werden. Ferner kann Energie von der PV-Anlage über den Netzanschlusspunkt ins öffentliche Stromnetz eingespeist werden. Die eingespeiste Energie wird gemessen, um die Vergütung zu berechnen.

Es ist möglich, dass über das Steuersignal gleichzeitig mehrere Grenzwerte festgelegt werden. Diese müssen nämlich nicht zu gleichen Zeitpunkten aktiv sein. Wann ein Grenzwert Gültigkeit hat, kann ebenfalls durch das Steuersignal festgelegt sein, so dass ein zeitlicher Ablauf des Betriebs des Energieversorgungssystems in verschiedenen Betriebszuständen erfolgen kann. Die Regel- oder Steuereinrichtung kann die verschiedenen festgelegten Grenzwerte zusammen mit den festgelegten Zeiträumen der jeweiligen Gültigkeit abspeichern und das Energieversorgungssystem entsprechend im jeweiligen Betriebszustand betreiben. Die Regel- oder Steuereinrichtung kann ferner konfiguriert sein, eine Prüfung vorzunehmen, um auszuschließen, dass gleichzeitig sich widersprechende Grenzwerte aktiv werden. Wird ein möglicher Konflikt festgestellt, kann die Regel- oder Steuereinrichtung eine Warnung ausgeben oder das Energiesystem entsprechend einer vorab festgelegten Priorisierung der Grenzwerte betreiben.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:

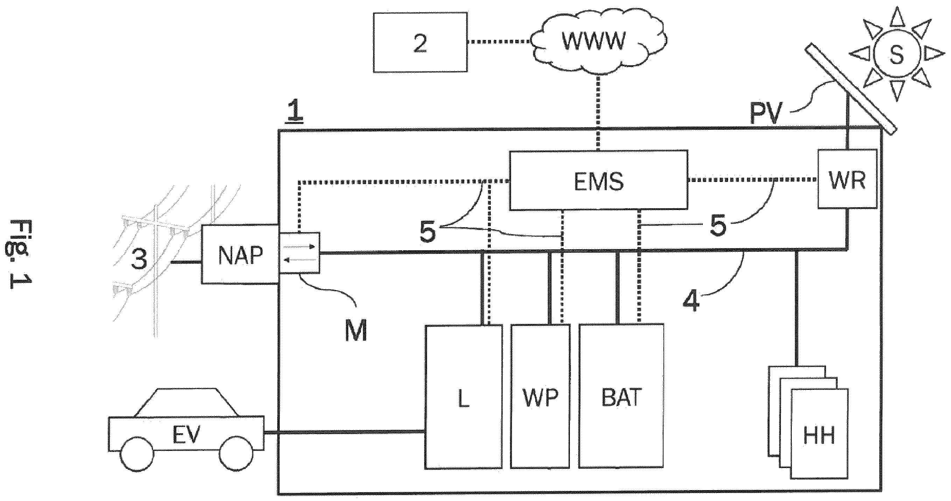

**Figur 1** Fig. 1 zeigt ein Energieversorgungssystem gemäß einem Ausführungsbeispiel der Erfindung.

### Ausführliche Beschreibung der Erfindung anhand von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

Figur 1 zeigt eine vereinfachte schematische Darstellung eines Ausführungsbeispiels eines erfindungsgemäßen Energieversorgungssystems 1 in einem Gebäude. Bei dem Gebäude kann es sich insbesondere um ein Wohngebäude oder ein Bürogebäude handeln. Das in Fig. 1 gezeigte Energieversorgungssystem 1 umfasst eine Photovoltaikanlage PV (im Folgenden auch als PV-Anlage abgekürzt), die Strahlungsenergie von der Sonne 3 in elektrische Energie umwandelt. Statt einer PV-Anlage oder zusätzlich zur PV-Anlage kann das Energieversorgungssystem 1 andere erneuerbare Energiequellen verwenden, wie zum Beispiel eine Windturbine und/oder einen Solarkollektor zum Erzeugen von Wärmeenergie. Ein Wechselrichter WR wandelt den von der PV-Anlage erzeugten Gleichstrom in Wechselstrom um, der von an einem internen Stromnetz 4 des Gebäudes angeschlossenen Verbrauchern HH (nicht steuerbare Energieverbraucher, zum Beispiel Haushaltsgeräte), WP (Wärmepumpe), L (Ladestation für Elektrofahrzeug) genutzt werden kann. Die durchgezogenen Linien symbolisieren hier das interne Stromnetz 4 des Gebäudes. Gepunktete Linien symbolisieren Kommunikationsleitungen 5 für den Datenverkehr, zum Beispiel zum Erfassen von Messwerten und/oder zum Steuern oder Regeln und/oder für den Datenaustausch mit einem Server 2 über das Internet WWW beziehungsweise in einem Intranet oder einer Cloud.

Das interne Stromnetz 4 des Gebäudes ist über einen Netzanschlusspunkt NAP mit einem öffentlichen Stromnetz 3 verbunden, das von einem Energieversorgungsunternehmen (Energieversorger) beziehungsweise Netzbetreiber betrieben wird. Ein Stromzähler M misst den Energieverbrauch (Leistungsaufnahme), der vom internen Stromnetz 4 aus dem öffentlichen Netz 3 bezogen wird, sowie die Menge an Energie (beziehungsweise produzierte Leistung integriert über die Zeit), die vom internen Stromnetz 4 in das öffentliche Netz eingespeist wird. Der Stromzähler M kann ein intelligenter Stromzähler, wie beispielsweise ein Smart Meter Gateway sein, das mit dem Internet oder einem Intranet verbunden sein kann. Der Stromzähler M kann über das Internet Messwerte an den Server 2 senden beziehungsweise Steuersignale empfangen. Ferner kann eine Regel- oder Steuereinrichtung EMS des Energieversorgungssystems 1 Messwerte vom Stromzähler M erfassen.

Das Energieversorgungssystem 1 umfasst einen Energiespeicher BAT zum Speichern elektrischer Energie, der zum Beispiel aus einer Vielzahl von Batterien beziehungsweise Akkus aufgebaut sein kann. Der Energiespeicher BAT umfasst einen Wechselrichter, der Wechselstrom aus dem Stromnetz 4 zum Laden des Energiespeichers BAT in Gleichstrom umgewandelt. Ferner kann der Wechselrichter Gleichstrom vom Energiespeicher BAT in Wechselstrom für das interne Stromnetz 4 umwandeln. Zum Laden des Energiespeichers BAT mit Energie von der PV-Anlage kann auch eine direkte Stromleitung zwischen PV-Anlage und Energiespeicher BAT vorgesehen sein, so dass ein Wandeln zwischen Gleichstrom und Wechselstrom beim Laden des Energiespeichers BAT entfallen kann. Eine solche direkte Gleichstromleitung kann auch zwischen dem Energiespeicher BAT und einer Ladestation L für ein Elektrofahrzeug EV vorgesehen sein.

Ein weiterer Bestandteil des Energieversorgungssystems 1 ist ein steuerbarer Energieverbraucher, hier exemplarisch dargestellt durch eine Wärmepumpe WP. Der Betrieb der Wärmepumpe WP kann durch die Regel- oder Steuereinrichtung EMS geregelt oder gesteuert werden. Das Energieversorgungssystem 1 kann auch weitere steuerbare Energieverbraucher umfassen. Beispielsweise kann eine Waschmaschine durch die Regel- oder Steuereinrichtung EMS gesteuert werden. Ferner können ein Lüftungssystem und/oder eine Klimaanlage und/oder eine Nachtspeicherheizung als steuerbare Energieverbraucher vorgesehen sein. Das dargestellte Energieversorgungssystem 1 weist auch eine Ladestation L für ein Elektrofahrzeug EV als steuerbaren Energieverbraucher auf.

Eine Vielzahl nicht steuerbarer Energieverbraucher HH ist am internen Stromnetz 4 des Gebäudes angeschlossen. Die nicht steuerbaren Energieverbraucher HH sind beispielsweise Haushaltsgeräte und/oder Beleuchtungsmittel oder sonstige Verbraucher, die von einem Benutzer oder Bewohner des Gebäudes ein- und ausgeschaltet werden können. In einem Bürogebäude können als nicht steuerbare Energieverbraucher HH unter anderem Computer, Drucker und/oder Kopierer vorhanden sein.

Der Energiebedarf der nicht steuerbaren Energieverbraucher HH soll in einem Betriebszustand des Energieversorgungssystems 1 bevorzugt direkt von der PV-Anlage gedeckt werden, so dass die lokal erzeugte Energie ohne Zwischenspeicherung direkt verbraucht werden kann, wobei ein Einspeisen in das öffentliche Stromnetz 3 ebenfalls vermieden werden soll. Ein direkter Verbrauch ist besonders effizient, da Verluste durch das Laden und Entladen des Energiespeichers BAT vermieden werden.

Wenn die von der PV-Anlage produzierte Leistung nicht groß genug ist, um den Bedarf der nicht steuerbaren Energieverbraucher HH zu decken, kann ein Teil der für die nicht steuerbaren Energieverbraucher HH benötigten Energie vom Energiespeicher BAT bezogen werden. Wenn der Bedarf der nicht steuerbaren Energieverbraucher HH weder von der PV-Anlage noch vom Energiespeicher BAT gedeckt werden kann, so kann auch Energie aus dem öffentlichen Netz über den Netzanschlusspunkt NAP bezogen werden. Je effizienter das Energieversorgungssystem 1 betrieben wird, desto weniger Energie muss aus dem öffentlichen Netz 3 bezogen werden. Die Regel- oder Steuereinrichtung EMS erfasst die Verbrauchswerte der Verbraucher HH, WP, L und passt den Betriebszustand des Energieversorgungssystems 1 in Abhängigkeit des Ladezustands des Energiespeichers BAT, der durch den lokalen Energieerzeuger PV bereitgestellten Leistung und/oder eines vom Energieversorger empfangenen Steuersignals an.

Die Regel- oder Steuereinrichtung EMS ist über Kommunikationsleitungen 5 mit dem Wechselrichter WR der PV-Anlage, mit der Wärmepumpe WP, mit dem Energiespeicher BAT, mit dem Stromzähler M am Netzanschlusspunkt NAP, mit der Ladestation L und über das Internet WWW mit dem Server 2 verbunden. Statt drahtgebundener Kommunikationsleitungen 5 kann (teilweise) auch eine drahtlose Kommunikation oder eine Kommunikation mittels Lichtwellenleitern zwischen der Regel- oder Steuereinrichtung EMS und den genannten Komponenten des Energieversorgungssystems 1 vorgesehen sein.

Das Energieversorgungssystem 1 kann in Abhängigkeit eines empfangenen Steuersignals in mindestens fünf verschiedenen Betriebszuständen betrieben werden. In einem ersten Betriebszustand des Energieversorgungssystems 1 wird die Vielzahl von steuerbaren WP, L und nicht steuerbaren HH Energieverbrauchern mit elektrischer Energie aus dem öffentlichen Stromnetz 3 versorgt, ohne dass die Leistungsaufnahme aus dem öffentlichen Stromnetz 3 begrenzt wird. Allerdings kann die Regel- oder Steuereinrichtung EMS auch im ersten Betriebszustand konfiguriert sein, den Bezug elektrischer Leistung aus dem öffentlichen Stromnetz 3 zu minimieren, indem beispielsweise bevorzugt lokal erzeugte Energie verbraucht wird.

In einem zweiten Betriebszustand des Energieversorgungssystems 1 wird die aus dem öffentlichen Stromnetz aufgenommene elektrische Leistung auf einen ersten Grenzwert GW1 begrenzt. Um die Vielzahl steuerbarer WP, L und nicht steuerbarer HH Energieverbraucher mit ausreichend elektrischer Energie zu versorgen, kann es dann notwendig sein, einen Teil der Energie aus dem Energiespeicher BAT (und/oder mit lokal erzeugter Energie) zu beziehen.

Insbesondere muss im zweiten Betriebszustand die über ein festgelegtes zeitliches Intervall gemittelte Aufnahme elektrischer Leistung aus dem öffentlichen Stromnetz 3 kleiner als der erste Grenzwert GW1 sein. Ein vorgegebener Zeitraum, zu dem der erste Grenzwert GW1 gültig ist, wird als Sperrzeit bezeichnet.

Sofern der erste Grenzwert GW1 nicht den Wert Null annimmt, kann im zweiten Betriebszustand also zumindest ein Teil der Energie zum Versorgen der Vielzahl steuerbarer WP, L und nicht steuerbarer HH Energieverbraucher aus dem öffentlichen Stromnetz 3 bezogen werden. Die zeitlich gemittelte Leistungsaufnahme aus dem öffentlichen Stromnetz 3 ist jedoch auf einen Betrag begrenzt, der durch den ersten Grenzwert GW1 festgelegt wird. Hierzu ist es notwendig, die aktuelle Leistungsaufnahme aus dem öffentlichen Stromnetz 3 über das festgelegte zeitliche Intervall von beispielsweise fünfzehn Minuten, beispielsweise mit dem Stromzähler M zu messen und mit dem ersten Grenzwert zu vergleichen, so dass eine Regelschleife realisiert wird.

Da im zweiten Betriebszustand lediglich die über das festgelegte zeitliche Intervall gemittelte Aufnahme elektrischer Leistung aus dem öffentlichen Stromnetz 3 kleiner als der erste Grenzwert GW1 sein muss, ist es nicht zwingend notwendig, dass die momentane Leistungsaufnahme zu jedem Zeitpunkt während der Sperrzeit kleiner als der erste Grenzwert GW1 ist. Ein kurzeitiges Überschreiten des ersten Grenzwerts GW1 kann zulässig sein, solange der Mittelwert kleiner als der Grenzwert ist. Eine Sperrzeit kann typischerweise eine Dauer von einigen Stunden, beispielsweise eine Stunde, zwei Stunden oder drei bis sechs Stunden haben.

Wird eine kurzzeitige Überschreitung des ersten Grenzwerts GW1 durch die Regel- oder Steuereinrichtung EMS erkannt, so kann sie darauf reagieren, indem mindestens einer der steuerbaren Energieverbraucher WP, L abgeschaltet oder gedrosselt wird, oder indem mehr Leistung aus dem Energiespeicher BAT bezogen wird. Liegt hingegen die momentane Leistungsaufnahme aus dem öffentlichen Netz 3 deutlich unter dem ersten Grenzwert GW1, kann eventuell sogar gänzlich auf einen Bezug von Energie aus dem Energiespeicher BAT verzichtet werden.

Um das Ziel der Netzdienlichkeit zu verwirklichen, muss nicht notwendigerweise der Bezug von Leistung aus dem öffentlichen Stromnetz 3 so gering wie nur möglich gehalten werden. Wichtig ist lediglich, dass der erste Grenzwert GW1 höchstens für eine sehr kurze Zeit überschritten werden darf. Als ein der Netzdienlichkeit nebengeordnetes Ziel, kann das erfindungsgemäße Verfahren jedoch auch darauf gerichtet sein, insgesamt möglichst wenig Energie aus dem öffentlichen Stromnetz 3 zu beziehen. Dies kann einerseits durch Verringern des Gesamtstromverbrauchs erreicht werden, als auch durch ein intelligentes Steuern des Beladens des Energiespeichers mit Energie vom lokalen Energieerzeuger PV. Ein solches Steuerverfahren wird beispielsweise in der deutschen Patentanmeldung mit dem Aktenzeichen DE 10 2017 203 249 beschrieben.

Neben dem ersten Grenzwert GW1 kann ein zweiter Grenzwert GW2 festgelegte werden, der eine minimale aus dem öffentlichen Stromnetz abzunehmende Leistung vorgibt. Entsprechend kann das Energieversorgungssystem 1 in einem dritten Betriebszustand so betrieben werden, dass die über ein festgelegtes zeitliches Intervall gemittelte Aufnahme elektrischer Leistung aus dem öffentlichen Stromnetz 3 mindestens dem zweiten Grenzwert GW2 entspricht. Somit kann eine Mindestabnahme an Leistung vorgegeben werden. Hierdurch kann die Netzdienlichkeit des Energieversorgungssystem 1 weiter verbessert werden. Wird beispielsweise sehr viel elektrische Energie durch den Energieversorger bereitgestellt, so kann über das Steuersignal ein Betrieb des Energieversorgungssystems 1 im dritten Betriebszustand bewirkt werden. Effektiv kann somit eine Mindestabnahme an Leistung angefordert werden.

Insbesondere wenn eine Vielzahl von Gebäuden ein erfindungsgemäßes Energieversorgungssystem 1 aufweist, kann über den zweiten Grenzwert GW2 und den entsprechenden dritten Betriebszustand die Notwendigkeit einer zentralen Speicherung eines Überangebots an Energie vermieden oder zumindest verringert werden. Wird beispielsweise bei starker Sonneneinstrahlung oder starkem Wind sehr viel mehr elektrische Energie durch erneuerbare Energieerzeuger (PV-Anlagen und Windkraftwerke) erzeugt und ins öffentliche Stromnetz eingespeist, kann der Betreiber dieser Energieerzeuger (Energieversorger) oder der Netzbetreiber ein Steuersignal an eine entsprechende Vielzahl von Energieversorgungssystemen 1 übertragen, um einen Betrieb im dritten Betriebszustand zu bewirken, so dass jeweils eine Mindestleistung gemäß einem zweiten Grenzwert GW2 abgenommen wird. Auf diese Weise kann die erzeugte Energie dezentral und verteilt über eine Vielzahl von Energieversorgungssystemen 1 abgenommen (also gespeichert beziehungsweise gesteuert verbraucht) werden. Die Netzdienlichkeit kann so in entsprechender Weise auch beim Betreiben einer Vielzahl erfindungsgemäßer Energieversorgungssysteme 1 im dritten Betriebszustand skaliert werden.

Das Vorgeben eines Grenzwerts beziehungsweise ein Betreiben eines Energieversorgungssystems 1 in einem festgelegten Betriebszustand kann wie bereits beschrieben in Abhängigkeit eines vom Energieversorger oder Netzbetreiber gesendeten Steuersignals geschehen. Das Steuersignal kann zu festgelegten wiederkehrenden Zeitpunkten oder aber zu beliebigen Zeitpunkten gesendet werden. Das Steuersignal kann auch Informationen zum Vorgeben oder Festlegen des ersten Grenzwerts GW1 und/oder des zweiten Grenzwerts GW2 umfassen. Mittels des Steuersignals oder über eine Vielzahl von Steuersignalen kann wie oben erwähnt eine Vielzahl erfindungsgemäßer Energieversorgungssysteme 1 gesteuert werden.

Die Regel- oder Steuereinrichtung EMS des erfindungsgemäßen Energieversorgungssystems 1 führt ein Verfahren mit den folgenden Verfahrensschritten aus. Mittels des Stromzählers M wird periodisch zu festgelegten Zeitpunkten, beispielsweise mit einer Zeitauflösung von weniger als einer Minute bis zu einer bis fünf Minuten, eine aktuell aus dem öffentlichen Stromnetz 3 aufgenommenen Leistung ermittelt. Der ermittelte Messwert wird von der Regel- oder Steuereinrichtung EMS in einer Speichereinrichtung gespeichert und/oder an den geographisch entfernten Server 2 übertragen.

Mittels der Kommunikationseinrichtung empfängt die Regel- oder Steuereinrichtung EMS ein Steuersignal vom Energieversorger oder Netzbetreiber. Hierzu ist die Kommunikationseinrichtung beispielsweise mit dem Internet verbunden. Das Steuersignal umfasst insbesondere Informationen, zum Festlegen mindestens einen ersten Grenzwert GW1, der eine maximale aus dem öffentlichen Stromnetz 3 zu beziehende Leistung angibt, und einer Gültigkeitsdauer des ersten Grenzwerts. Ferner kann das Steuersignal auch vorgeben, ob das Energieversorgungssystems 1 in einem von mehreren Betriebszuständen betrieben werden soll.

Alternativ oder zusätzlich kann das Steuersignal einen zweiten Grenzwert GW2 vorgeben, der eine minimale aus dem öffentlichen Stromnetz 3 zu beziehende Leistung angibt. Entsprechend kann das Energieversorgungssystem 1 für einen festgelegten Zeitraum in einem dritten Betriebszustand betrieben werden, in dem der zweite Grenzwert GW2 gültig ist. Im dritten Betriebszustand muss die über ein festgelegtes zeitliches Intervall gemittelte Aufnahme elektrischer Leistung aus dem öffentlichen Stromnetz größer als der zweite Grenzwert GW2 sein.

In einem weiteren Schritt des Verfahrens wird eine Verbrauchsprognose anhand von historischen Verbrauchsdaten der Vielzahl von Energieverbrauchern HH, WP, L erstellt. Das Betreiben des Energieversorgungssystems 1 in einem der Betriebszustände kann in Abhängigkeit der Verbrauchsprognose erfolgen. Die Prognose kann beispielsweise vom Server 2 und/oder lokal von einem Prozessor der Regel- oder Steuereinrichtung EMS erstellt werden. Hierzu können die zuvor übertragenen und/oder lokal gespeicherten Verbrauchsdaten ausgewertet werden.

Das erfindungsgemäße Verfahren beziehungsweise das erfindungsgemäße Energieversorgungssystem 1 erlauben es, ein Gebäude als Ganzes zu einem steuerbaren Energieverbraucher zu machen. Hierdurch kann das Energieversorgungssystem 1 in netzdienlicher Weise betrieben werden, so dass neben den Vorteilen für den Netzbetreiber auch wirtschaftliche Vorteile für den Nutzer des Gebäudes als Kunde des Netzbetreibers erzielt werden können, da zwischen Netzbetreiber und Stromkunden ein reduzierter Stromtarif vereinbart werden kann. Gegenüber speziellen Tarifen, die auf einzelne steuerbare Verbraucher WP, L ausgerichtet sind, wie zum Beispiel spezielle Wärmepumpentarife, weist das erfindungsgemäße Energieversorgungssystem 1 zudem den Vorteil auf, dass nicht für jeden Verbraucher ein abrechnungsrelevanter und speziell zugelassener beziehungsweise geeichter Stromzähler vorhanden sein muss, sondern nur ein entsprechender Zähler am Netzanschlusspunkt für das ganze Energieversorgungssystem 1.

### Bezugszeichenliste

- **1**: Energieversorgungssystem
- **2**: Server
- **3**: Öffentliches Stromnetz
- **4**: Internes Stromnetz
- **5**: Kommunikationsleitungen
- **S**: Sonne
- **PV**: Photovoltaik-Anlage
- **WP**: Wärmepumpe
- **L**: Ladestation für Elektrofahrzeug
- **EV**: Elektrofahrzeug
- **BAT**: Energiespeicher
- **NAP**: Netzanschlusspunkt
- **WWW**: Internet
- **EMS**: Regel- oder Steuereinrichtung
- **M**: Stromzähler
- **WR**: Wechselrichter
- **HH**: nicht steuerbarer Energieverbraucher (Haushaltsgerät)

## Patentansprüche

1. Verfahren zum Betreiben eines Energieversorgungssystems (1) zum Versorgen einer Vielzahl elektrischer Energieverbraucher (HH, WP, L) in einem Gebäude, wobei das Energieversorgungssystems (1) umfasst:
einen Energiespeicher (BAT) zum Speichern elektrischer Energie, der über ein internes Stromnetz (4) des Gebäudes mit der Vielzahl elektrischer Energieverbraucher (HH, WP, L) verbunden ist;
einen Netzanschlusspunkt (NAP), über den das interne Stromnetz mit einem öffentlichen Stromnetz (3) verbunden ist, und über den elektrische Leistung aus dem öffentlichen Stromnetz (3) bezogen und/oder in das öffentliche Stromnetz (3) eingespeist werden kann;
eine Einrichtung (M) zum Ermitteln einer aktuell aus dem öffentlichen Stromnetz (3) aufgenommenen Leistung; und
eine Kommunikationseinrichtung zum Empfangen von Steuersignalen, wobei das Verfahren umfasst:
Ermitteln der aktuell aus dem öffentlichen Stromnetz (3) aufgenommenen Leistung;
Empfangen eines Steuersignals mittels der Kommunikationseinrichtung;
Betreiben des Energieversorgungssystems (1) in einem von mindestens zwei Betriebszuständen in Abhängigkeit des empfangenen Steuersignals,
wobei im ersten Betriebszustand die Vielzahl von Energieverbrauchern (HH, WP, L) ohne Begrenzung der aufgenommenen Leistung mit elektrischer Energie aus dem öffentlichen Stromnetz (3) versorgt wird,
wobei ein erster Grenzwert (GW1) vorgegeben wird, der eine maximale aus dem öffentlichen Stromnetz (3) zu beziehende Leistung angibt,
**dadurch gekennzeichnet, dass**:
im zweiten Betriebszustand die Vielzahl von Energieverbrauchern (HH, WP, L) zumindest zeitweise mit elektrischer Energie aus dem Energiespeicher (BAT) versorgt wird, so dass die über ein festgelegtes zeitliches Intervall gemittelte Aufnahme elektrischer Leistung aus dem öffentlichen Stromnetz (3) kleiner als der erste Grenzwert (GW1) ist; und
ein zweiter Grenzwert (GW2) vorgegeben wird, der eine minimale aus dem öffentlichen Stromnetz (3) zu beziehende Leistung angibt und das Energieversorgungssystem (1) in einem dritten Betriebszustand so betrieben wird, dass die über einen festgelegten Zeitraum gemittelte Aufnahme elektrischer Leistung aus dem öffentlichen Stromnetz (3) mindestens dem zweiten Grenzwert (GW2) entspricht.

2. Verfahren nach Anspruch 1, wobei ein dritter Grenzwert (GW3) vorgegeben wird, der eine minimale ins öffentliche Stromnetz (3) einzuspeisende Leistung angibt, und/oder ein vierter Grenzwert vorgegeben wird, der eine maximale ins öffentliche Stromnetz (3) einzuspeisende Leistung angibt.

3. Verfahren nach Ansprüchen 1 und 2, wobei der erste Grenzwert (GW1) und/oder der zweite Grenzwert (GW2) und/oder der dritte Grenzwert (GW3) und eine Dauer der Gültigkeit des ersten Grenzwerts (GW1) und/oder des zweiten Grenzwerts (GW2) und/oder des dritten Grenzwerts (GW3) durch das empfangene Steuersignal vorgegeben werden.

4. Verfahren nach mindestens einem der vorhergehenden Ansprüche, wobei die Vielzahl von Energieverbrauchern (HH, WP, L) mindestens einen steuerbaren Energieverbraucher (WP, L) umfasst, der abgeschaltet wird, wenn ein Überschreiten des ersten Grenzwerts (GW1) erkannt wird.

5. Verfahren nach Anspruch 4, wobei der mindestens eine steuerbarere Energieverbraucher eine Wärmepumpe (WP) oder eine Ladestation (L) für ein Elektrofahrzeug (EV) ist.

6. Verfahren nach Anspruch 1, wobei das Energieversorgungssystem (1) während festen vorgegebenen Zeiträumen im zweiten oder dritten Betriebszustand betrieben wird.

7. Verfahren nach Anspruch 1, wobei in einem weiteren Schritt des Verfahrens eine Verbrauchsprognose anhand von historischen Verbrauchsdaten der Vielzahl von Energieverbrauchern (HH, WP, L) erstellt wird und das Betreiben des Energieversorgungssystems (1) im ersten, zweiten oder dritten Betriebszustand in Abhängigkeit der Verbrauchsprognose erfolgt.

8. Verfahren nach Anspruch 1, wobei das Betreiben des Energieversorgungssystems (1) im ersten, zweiten oder dritten Betriebszustand in Abhängigkeit einer Prognose der Stromerzeugung des Energieversorgers und/oder des lokalen Energieerzeugers (PV) erfolgt.

9. Einrichtung (EMS) zum Regeln oder Steuern eines Energieversorgungssystems (1) zum Versorgen einer Vielzahl elektrischer Energieverbraucher (HH, WP, L) in einem Gebäude, wobei das Energieversorgungssystems (1) umfasst:
einen Energiespeicher (BAT) zum Speichern elektrischer Energie, der über ein internes Stromnetz (4) des Gebäudes mit der Vielzahl elektrischer Energieverbraucher (HH, WP, L) verbunden ist;
einen Netzanschlusspunkt (NAP), über den das interne Stromnetz mit einem öffentlichen Stromnetz (3) verbunden ist, und über den elektrische Energie aus dem öffentlichen Stromnetz (3) bezogen und/oder in das öffentliche Stromnetz (3) eingespeist werden kann;
eine Einrichtung (M) zum Messen einer aktuellen Leistungsaufnahme aus dem öffentlichen Stromnetz (3); und
eine Kommunikationseinrichtung zum Empfangen von Steuersignalen, **dadurch gekennzeichnet, dass**
die Einrichtung (EMS) einen Datenträger aufweist, auf dem ein Programm gespeichert ist, das Instruktionen zum Ausführen eines Verfahrens nach mindestens einem der Ansprüche 1 bis 8 umfasst.

## Claims

1. A method for operating a power supply system (1) for powering a plurality of electric power consumers (HH, WP, L) in a building, said power supply system (1) comprising:
an energy storage device (BAT) for storing electrical energy, which is connected to the plurality of electric power consumers (HH, WP, L) via an internal power network (4) of the building;
a grid connection point (NAP) via which the internal power grid is connected to a public power grid (3) and via which electrical power is obtained from the public power grid (3) and/or is fed into the public power grid (3);
a device (M) for determining a power which is currently being absorbed from the public power grid (3); and
a communication device for receiving control signals, the method comprising:
- determining the power which is currently being absorbed from the public power grid (3);
- receiving a control signal by means of the communication device;
- operating the power supply system (1) in one of at least two operating states as a function of the received control signal, wherein
in the first operating state the plurality of electric power consumers (HH, WP, L) is provided with electrical energy from the public power grid (3) without limitation of the power that is absorbed, wherein
a first threshold value (GW1) is predetermined which indicates a maximum power to be obtained from the public power grid (3),
**characterized in that**:
in the second operating state, the plurality of electric power consumers (HH, WP, L) is provided, at least temporarily, with electrical energy from the energy storage device (BAT) so that the uptake of electrical power from the public power grid (3), averaged over a specified time interval, is less than the first threshold value (GW1); and
a second threshold value (GW2) is specified, which specifies a minimum power to be obtained from the public power grid (3), and the power supply system (1) is operated in a third operating state in such a way that the uptake of electrical power from the public power grid (3), averaged over a specified time interval, corresponds at least to the second threshold value (GW2).

2. The method according to claim 1, wherein
a third threshold value (GW3) is specified, which specifies a minimum power to be fed into the public power grid (3), and/or a fourth threshold value is specified, which specifies a maximum power to be supplied into the public power grid (3).

3. The method according to claims 1 and 2, wherein
the first threshold value (GW1) and/or the second threshold value (GW2) and/or the third threshold value (GW3) and a duration of validity of the first threshold value (GW1) and/or the second threshold value (GW2) and/or the third threshold value (GW3) are predetermined by the received control signal.

4. The method according to at least one of the preceding claims, wherein
the plurality of electric power consumers (HH, WP, L) comprises at least one controllable energy consumer (WP, L) which is switched off when an exceedance of the first threshold value (GW1) is detected.

5. The method according to claim 4, wherein
the at least one controllable energy consumer is a heat pump (WP) or a charging station (L) for an electric vehicle (EV).

6. The method according to claim 1, wherein
the power supply system (1) is operated in the second or third operating state during fixed predetermined periods of time.

7. The method according to claim 1, wherein
in a further step of the method a consumption forecast is generated based on historical consumption data of the plurality of electric power consumers (HH, WP, L) and the operation of the power supply system (1) in the first, second or third operating state is performed in accordance with the consumption forecast.

8. The method according to claim 1, wherein
the operation of the power supply system (1) in the first, second or third operating state takes place in accordance with a forecast of the power generation of the power provider and/or the local power producer (PV).

9. A device (EMS) for regulating or controlling a power supply system (1) for powering a plurality of electric power consumers (HH, WP, L) in a building, said power supply system (1) comprises:
an energy storage device (BAT) for storing electrical energy, which is connected to the plurality of electric power consumers (HH, WP, L) via an internal power network (4) of the building;
a grid connection point (NAP) via which the internal power grid is connected to a public power grid (3) and via which electrical power is obtained from the public power grid (3) and/or is fed into the public power grid (3);
a device (M) for determining a power which is currently being absorbed from the public power grid (3); and
a communication device for receiving control signals,
**characterized in that**:
the device (EMS) comprises a data carrier on which a program is stored comprising instructions for executing a method according to at least one of claims 1 to 8.

## Revendications

1. Procédé pour faire fonctionner un système d'alimentation en énergie (1) pour alimenter une pluralité de consommateurs d'énergie (HH, WP, L) électriques dans un bâtiment, dans lequel le système d'alimentation en énergie (1) comprend :
un accumulateur d'énergie (BAT) pour accumuler de l'énergie électrique, qui est relié à la pluralité de consommateurs d'énergie (HH, WP, L) électriques par l'intermédiaire d'un réseau électrique interne (4) du bâtiment ;
un point de raccordement au réseau (NAP), par l'intermédiaire duquel le réseau électrique interne est relié à un réseau électrique publique (3), et par l'intermédiaire duquel de la puissance électrique peut être perçue du réseau électrique publique (3) et/ou injectée dans le réseau électrique publique (3) ;
un système (M) pour déterminer une puissance actuellement accueillie à partir du réseau électrique publique (3) ; et
un système de communication pour recevoir des signaux de commande, dans lequel le procédé comprend :
la détermination de la puissance actuellement accueillie à partir du réseau électrique publique (3) ;
la réception d'un signal de commande au moyen du système de communication ;
le fonctionnement du système d'alimentation en énergie (1) dans un d'au moins deux états de fonctionnement en fonction du signal de commande reçu,
dans lequel dans le premier état de fonctionnement la pluralité de consommateurs d'énergie (HH, WP, L) est alimentée en énergie électrique provenant du réseau électrique publique (3) sans limitation de la puissance accueillie,
dans lequel une premier valeur limite (GW1) est prédéfinie, qui indique une puissance maximale à percevoir du réseau électrique publique (3),
**caractérisé en ce que** :
dans le deuxième état de fonctionnement la pluralité de consommateurs d'énergie (HH, WP, L) est alimentée au moins par intermittence en énergie électrique provenant de l'accumulateur d'énergie (BAT), de sorte que l'accueil de puissance électrique provenant du réseau électrique publique (3) dont la moyenne est calculée pendant un intervalle de temps défini est inférieur à la première valeur limite (GW1) ; et
une deuxième valeur limite (GW2) est prédéfinie, qui indique une puissance minimale à percevoir du réseau électrique publique (3) et le système d'alimentation en énergie (1) fonctionne dans un troisième état de fonctionnement, de sorte que l'accueil de puissance électrique provenant du réseau électrique publique (3) dont la moyenne est calculée pendant un laps de temps défini correspond au moins à la deuxième valeur limite (GW2).

2. Procédé selon la revendication 1, dans lequel une troisième valeur limite (GW3) est prédéfinie, qui indique une puissance minimale à injecter dans le réseau électrique publique (3), et/ou une quatrième valeur limite est prédéfinie, qui indique une puissance maximale à injecter dans le réseau électrique publique (3).

3. Procédé selon les revendications 1 et 2, dans lequel la première valeur limite (GW1) et/ou la deuxième valeur limite (GW2) et/ou la troisième valeur limite (GW3) et une durée de la validité de la première valeur limite (GW1) et/ou de la deuxième valeur limite (GW2) et/ou de la troisième valeur limite (GW3) sont prédéfinies par le signal de commande reçu.

4. Procédé selon au moins l'une des revendications précédentes, dans lequel la pluralité de consommateurs d'énergie (HH, WP, L) comprend au moins un consommateur d'énergie (WP, L) pouvant être commandé, qui est éteint lorsqu'un dépassement de la première valeur limite (GW1) est détecté.

5. Procédé selon la revendication 4, dans lequel le au moins un consommateur d'énergie pouvant être commandé est une pompe à chaleur (WP) ou une station de charge (L) pour un véhicule électrique (EV).

6. Procédé selon la revendication 1, dans lequel le système d'alimentation en énergie (1) fonctionne dans le deuxième ou troisième état de fonctionnement pendant des intervalles de temps prédéfinis fixes.

7. Procédé selon la revendication 1, dans lequel dans une autre étape du procédé un pronostic de consommation est établi sur la base de données de consommation historiques de la pluralité de consommateurs d'énergie (HH, WP, L) et le fonctionnement du système d'alimentation en énergie (1) dans le premier, deuxième ou troisième état de fonctionnement s'effectue en fonction du pronostic de consommation.

8. Procédé selon la revendication 1, dans lequel le fonctionnement du système d'alimentation en énergie (1) dans le premier, deuxième ou troisième état de fonctionnement s'effectue en fonction d'un pronostic de la production d'électricité du fournisseur d'énergie et/ou du producteur d'énergie local (PV).

9. Système (EMS) pour la régulation ou commande d'un système d'alimentation en énergie (1) pour alimenter une pluralité de consommateurs d'énergie (HH, WP, L) électriques dans un bâtiment, dans lequel le système d'alimentation en énergie (1) comprend :
un accumulateur d'énergie (BAT) pour accumuler l'énergie électrique, qui est relié par l'intermédiaire d'un réseau électrique interne (4) du bâtiment à la pluralité de consommateurs d'énergie (HH, WP, L) électriques ;
un point de raccordement au réseau (NAP), par l'intermédiaire duquel le réseau électrique interne est relié à un réseau électrique publique (3), et par l'intermédiaire duquel de l'énergie électrique peut être perçue à partir du réseau électrique publique (3) et/ou injectée dans le réseau électrique publique (3) ;
un système (M) pour mesurer un accueil de puissance actuel provenant du réseau électrique publique (3) ; et
un système de communication pour recevoir des signaux de commande, **caractérisé en ce que**
le système (EMS) présente un support de données, sur lequel un programme est stocké, qui comprend des instructions pour la mise en oeuvre d'un procédé selon au moins l'une des revendications 1 à 8.
